# EUROPEAN PATENT APPLICATION

(11) **EP 4 523 912 A1**
(43) Date of publication of application: **19.03.2025**
(21) Application number: 23803663.6
(22) Date of filing: 14.02.2023
(51) Int. Cl.: B32B 41/00, B32B 41/02, B32B 38/18

(54) **LAMINATION APPARATUS AND CONTROL METHOD THEREFOR**

(30) Priority: 11.05.2022 KR 20220057756
(71) Applicant: LG Energy Solution, Ltd., Seoul 07335 (KR)
(72) Inventor: CHO, Kwooman, Daejeon 34122 (KR)
(74) Representative: Goddar, Heinz J.
(86) International application number: PCT/KR2023/002167
(87) International publication number: WO 2023/219235

(57) **Abstract**

Disclosed are a lamination device and a control method therefor. The present invention comprises: a plurality of calibration marks arranged on an upper gripper; a vision camera that captures the images of the plurality of calibration marks; a correction driving unit-connected to a lower gripper and the upper gripper to correct the height thereof; and a controller that reads the plurality of calibration marks to calculate a positional deviation of the actual position of the upper gripper from a preset acceptable range of positions and moves the lower gripper and the upper gripper to correct the positional deviation.

## Description

### [Technical Field]

This application claims the benefit of priority to Korean Patent Application No. 10-2022-0057756, filed on May 11, 2022 in the Korean Intellectual Property Office, the disclosure of which is incorporated herein by reference in its entirety.

The present invention relates to a lamination device capable of eliminating a positional deviation between a lower gripper and an upper gripper, and a control method thereof.

### [Background Art]

In general, a secondary battery includes a positive electrode, a negative electrode, a separator, and an electrolyte, and generates electrical energy using a chemical reaction. The use of secondary batteries is gradually increasing due to the advantage of being able to charge and discharge. Among these secondary batteries, lithium secondary batteries have a high energy density per unit weight, and thus are widely used as power sources of electronic communication devices and as driving sources of high-output hybrid vehicles, electric vehicles, or the like.

In terms of a shape of the secondary battery, there is a growing demand for prismatic type secondary batteries and pouch-type secondary batteries that can be applied to products such as mobile phones and the like due to their small thickness. In terms of a material of the secondary battery, there is a growing demand for lithium secondary batteries, such as lithium-ion batteries and lithium-ion polymer batteries, which have high energy density, discharge voltage, and output stability.

An electrode sheet is supplied to a notching module, and the notching module forms electrode tabs with equal spacing on one side of the electrode sheet in a width direction. The electrode sheet on which the electrode tabs are formed is rewound on a rewinder.

Korean Patent Publication No. 2328527 discloses a lamination device. In the lamination device, electrode sheets wound on two electrode rolls and separator sheets wound on two separator rolls are supplied. At this time, a first cutter unit cuts a first electrode sheet to form a first electrode, which is then laminated between a pair of separator sheets, and a second cutter unit cuts a second electrode sheet to form a second electrode, which is then laminated on an upper separator sheet. In this case, the second electrode is laminated on the upper separator sheet in a one-to-one correspondence with the first electrode.

An electrode laminate in which the cut first electrode and second electrode are laminated respectively on the separator sheets is supplied to a heater unit and a lamination roller of a laminator. The heater unit heats the electrode laminate, and the lamination roller presses and combines the electrode laminate. Subsequently, a third cutter unit installed on a downstream side of the lamination roller cuts a portion of the separator sheet between a pair of adjacent electrodes to form a mono-cell. A vision device is installed on a downstream side of the laminator in order to check the mono-cell.

When the mono-cell supplied to the vision device is transferred at a high speed in a state of being heated by the heater unit or when the pressure is excessive in the laminator, the mono-cell supplied to the vision device may be bent or twisted. In addition, the electrode tab in a shape protruding from a circumference of the mono-cell may be bent upward or downward. In order to correct the shape deformation of the mono-cell, a gripper configured to press the mono-cell is installed in the vision device. In a state in which the gripper presses the mono-cell, a vision unit reads the mono-cell.

However, as the gripper is lifted and lowered at a high speed, a bolt or a nut at the assembled portion of the gripper may be slightly loosened or the gripper may be bent. In this case, a gap between the vision unit and the mono-cell is changed, and thus it may be difficult for the vision unit to accurately read whether the mono-cell is defective.

**In** addition, when the vision unit reads the mono-cell in a state in which the gap between the vision unit and the mono-cell is changed to be greater than or equal to an allowable value, continuous mismeasurement of the mono-cell may occur, and thus a defect rate of the mono-cell may be significantly increased. **In** addition, the mono-cell within an allowable value range may be determined to be defective.

### [Disclosure]

### [Technical Problem]

The present invention is designed to solve the above-mentioned problems, and is directed to providing a lamination device capable of solving a positional deviation between a lower gripper and an upper gripper, and a control method thereof.

The present invention is also directed to providing a lamination device capable of preventing a gap between a vision unit and a unit cell from being changed to be outside an allowable value, and a control method thereof.

The present invention is also directed to providing a lamination device capable of preventing continuous mismeasurement of a unit cell and significantly reducing a defect rate of the unit cell, and a control method thereof.

The present invention is also directed to providing a lamination device capable of preventing a unit cell within an allowable value range (good quality range) from being determined to be defective, and a control method thereof.

The present invention is also directed to providing a lamination device capable of determining whether an upper gripper is changed in height or tilted in a direction perpendicular to a direction parallel to a transfer path of a unit cell, and a control method thereof.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [Technical Solution]

According to an aspect of the present invention, there is provided a lamination device including a lower gripper to which a unit cell is supplied, an upper gripper installed on an upper side of the lower gripper to be liftable and lowerable in a vertical direction, a gripper driving unit configured to lift and lower the upper gripper so that the upper gripper presses the unit cell.

The lower gripper and the upper gripper may spread the unit cell and an electrode tab to be flat.

The lamination device includes a plurality of calibration marks disposed on the upper gripper, a vision camera configured to capture an image of the plurality of calibration marks, a correction driving unit connected to the lower gripper and the upper gripper to correct a height of each of the lower gripper and the upper gripper, and a control unit configured to read the plurality of calibration marks to calculate a positional deviation between an actual position of the upper gripper and a preset allowable position range, and move the lower gripper and the upper gripper to correct the positional deviation.

An allowable image range for the plurality of calibration marks may be preset in the control unit.

The control unit may calculate the positional deviation of the upper gripper by comparing the allowable image range with a size of the actual image captured by the vision camera.

Some calibration marks may be disposed side by side at a first distance from one end of the upper gripper, and the remaining calibration marks may be disposed side by side at a second distance from the one end of the upper gripper.

The upper gripper may include a transparent window through which light of the vision camera passes.

A circumference of the transparent window may be coated with an anodizing layer.

The anodizing layer may be black, and the calibration marks may be white.

Each of the calibration marks may be formed in a circular shape.

The vision camera may capture the image of the plurality of calibration marks when the upper gripper is completely lowered. Accordingly, the vision camera may simultaneously capture the image of the calibration marks and an image of the unit cell.

The vision camera may be disposed on an upper side of the upper gripper.

The vision camera may re-capture an image of the calibration marks after a position of the upper gripper is corrected, and the control unit may check again whether the corrected position of the upper gripper is within the allowable position range.

The lower gripper may be fixed to a linear guide, and the upper gripper may be installed on the linear guide to be liftable and lowerable.

The lamination device may further include an alarm generation unit configured to notify that the upper gripper is to be replaced, when a corrected position of the upper gripper is outside the allowable position range.

A method of controlling a lamination device of the present invention includes supplying a unit cell to a lower gripper, and pressing the unit cell by lowering an upper gripper.

Accordingly, the lower gripper and the upper gripper may spread the unit cell and an electrode tab to be flat.

The method of controlling a lamination device of the present invention includes capturing, by a vision camera, an image of a plurality of calibration marks formed on the upper gripper and transmitting the image to a control unit, reading, by the control unit, the plurality of calibration marks and calculating a positional deviation between an actual position of the upper gripper and a preset allowable position range, and moving the lower gripper and the upper gripper to correct the positional deviation when the positional deviation is outside the allowable position range.

Some calibration marks may be disposed side by side at a first distance from one end of the upper gripper, and the remaining calibration marks may be disposed side by side at a second distance from the one end of the upper gripper.

A circumference of a transparent window of the upper gripper may be coated with an anodizing layer.

The anodizing layer may be black, and the calibration marks may be white.

Each of the calibration marks may be formed in a circular shape.

The vision camera may capture the image of the plurality of calibration marks when the upper gripper is completely lowered.

The method of controlling a lamination device may further include re-capturing an image of the calibration marks by the vision camera after a position of the upper gripper is corrected, and checking, by the control unit, again whether the corrected position of the upper gripper is within the allowable position range.

The method of controlling a lamination device may further include outputting an alarm signal by an alarm generation unit when the corrected position of the upper gripper is outside the allowable position range

### [Advantageous Effects]

According to the present invention, a correction driving unit corrects positions of a lower gripper and an upper gripper, so that positional deviation between the lower gripper and the upper gripper can be eliminated.

According to the present invention, since the correction driving unit corrects the positions of the lower gripper and the upper gripper, it is possible to prevent a gap between the vision unit and the unit cell from being changed to be outside an allowable value.

According to the present invention, since the positions of the lower gripper and the upper gripper are corrected by moving the lower gripper and the upper gripper by the positional deviation, continuous mismeasurement of the unit cell can be prevented and a defective rate of the unit cell can be significantly reduced.

According to the present invention, since the gap between the vision unit and the unit cell is corrected to be within an allowable value range, it is possible to prevent the unit cell corresponding to a good product from being determined to be defective.

According to the present invention, by calculating an actual size of each of a plurality of calibration marks positioned at a first distance and a second distance, it is possible to determine whether the upper gripper is changed in height or tilted in a direction perpendicular to a direction parallel to a transfer path of the unit cell.

**In** addition to the above-described effects, specific effects of the present invention will be described together with the following detailed description for implementing the present invention.

### [Description of Drawings]

FIG. 1 is a view schematically illustrating a lamination device according to the present invention.
FIG. 2 is a view schematically illustrating a unit cell manufactured by the lamination device of FIG. 1.
FIG. 3 is a perspective view schematically illustrating a vision unit in the lamination device of FIG. 1.
FIG. 4 is a side view schematically illustrating the vision unit in the lamination device of FIG. 1.
FIG. 5 is a plan view schematically illustrating a state in which calibration marks are formed on an upper surface of an upper gripper in the vision unit of FIG. 4.
FIG. 6 is a cross-sectional view schematically illustrating a state in which the calibration marks and an anodizing layer are applied on the upper surface of the upper gripper in the vision unit of FIG. 4.
FIG. 7 is a perspective view schematically illustrating a correction driving unit in the lamination device of FIG. 1.
FIG. 8 is a block diagram schematically illustrating the lamination device according to the present invention.
FIG. 9 is a view illustrating an example of a captured image of the calibration marks according to the present invention.
FIG. 10 is a view illustrating a case in which positions of a lower gripper and the upper gripper according to the present invention are within an allowable position range.
FIG. 11 is a view illustrating another example of the captured image of the calibration marks according to the present invention.
FIG. 12 is a view illustrating a case in which the positions of the lower gripper and the upper gripper according to the present invention are outside the allowable position range.
FIG. 13 is a view illustrating still another example of the captured image of the calibration marks according to the present invention.
FIG. 14 is a view illustrating a case in which the lower gripper and the upper gripper according to the present invention are deformed by themselves.
FIG. 15 is a flowchart schematically illustrating a control method of the lamination device according to the present invention.

10: unit cell, 11: first electrode
12: second electrode, 13: separator
13a: first separator, 13b: second separator
100: lamination device, 102: electrode laminate
110: first electrode roll, 111: first electrode sheet
120: second electrode roll, 121: second electrode sheet
130: separator roll, 130a: first separator roll
131: separator sheet, 131a: first separator sheet
130b: second separator roll, 131b: second separator sheet
133: pinch roller, 141: first cutter unit
143: second cutter unit, 150: lamination unit
151: heater unit, 153: lamination roller unit
153a: upper lamination roller, 153b: lower lamination roller
155: pressure control unit, 160: final cutter
V: vision unit, 171: linear guide
172: lower gripper, 173: upper gripper
174: frame unit, 175: transparent window
176: gripper driving unit, 177: vision camera
180: correction driving unit, 181: case unit
182: correction motor unit, 183: ball screw
184: rotation prevention rod, 185: slider
191: control unit, 193: alarm generation unit
C1, C2, C3, C4, C5, and C6: calibration marks
AD: anodizing layer, L: reference line
P1: first distance, P2: second distance

### [Modes of the Invention]

Hereinafter, exemplary embodiments of the present invention will be described with reference to the accompanying drawings in detail.

The present invention is not limited to the embodiments disclosed below and susceptible to various modifications, and can be implemented in various different forms. The present embodiments are provided only to complete the disclosure of the present invention and assist those skilled in the art to completely understand the scope of the present invention. Accordingly, the present invention is not limited to the embodiments disclosed below, and it should be understood that configurations of any one embodiment and configurations of another embodiment are substituted or added to each other, and all modifications, equivalents and substitutes are fall within the technical spirit and scope of the present invention.

The accompanying drawings are merely intended to facilitate understanding of embodiments disclosed in this specification, and the technical spirit disclosed herein is not limited by the accompanying drawings, and it should be understood that all modifications, equivalents, and substitutes fall within the spirit and technical scope of the present invention. In the drawings, sizes or thicknesses of components may be exaggerated in consideration of the ease of understanding or the like, but the protection scope of the present invention should not be construed as being limited thereto.

The terms used herein are only used to describe a particular implementation or embodiment, and are not intended to limit the present invention. In addition, singular forms are intended to include plural forms as well, unless the context clearly indicates otherwise. In the present specification, terms such as "including," "composed of ~," and the like are intended to indicate the existence of features, numbers, operations, actions, components, parts, or combinations thereof disclosed in the specification. It should be understood that the terms such as "including," "composed of ~," and the like are not intended to preclude the possibility that one more other features, numbers, steps, actions, components, parts, or combinations thereof may be present or added.

Although the terms including ordinal numbers such as "first," "second," and the like may be used to describe various components, these components should not be limited by these terms. The terms are used only for the purpose of distinguishing one component from another.

When it is said that a component is "connected" to another component, it should be understood that the component is directly connected to another component or still another component may be interposed therebetween. On the other hand, when it is said that a component is "directly connected" or "directly linked" to another component, it should be understood that other components are not present therebetween.

When it is said that a component is on an "upper portion" or "lower portion" of another component, it should be understood that the component may be disposed directly on another component, as well as still another component may be interposed therebetween.

Unless otherwise defined, all terms used herein, including technical and scientific terms, have the same meaning as commonly understood by one of ordinary skill in the art to which the present invention belongs. It should be further understood that terms, such as those defined in commonly used dictionaries, should be interpreted as having a meaning that is consistent with their meaning in the context of the relevant art and are not to be interpreted in an idealized or overly formal sense unless expressly so defined herein.

Hereinafter, a device according to an embodiment of the present invention will be described.

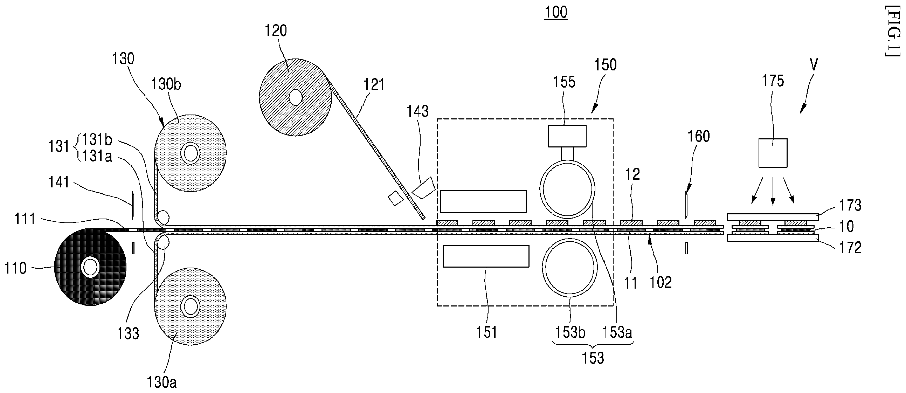

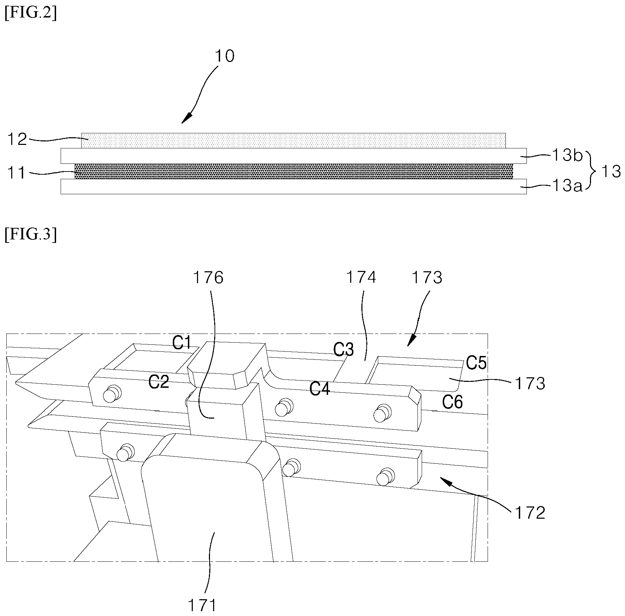

FIG. 1 is a view schematically illustrating a lamination device according to the present invention, and FIG. 2 is a view schematically illustrating a unit cell manufactured by the lamination device of FIG. 1.

Referring to FIGS. 1 and 2, in a lamination device 100 according to an embodiment of the present invention, a vision unit V captures an image of a plurality of calibration marks C1 to C6 positioned on an upper gripper 173, and a control unit 191 compares the image of the calibration marks C1 to C6 with a preset allowable position range to calculate a positional deviation of the upper gripper 173. In addition, the control unit moves a lower gripper 172 and the upper gripper 173 to correct the positional deviation.

The lamination device 100 manufactures unit cells 10. Each of the unit cells 10 may be any one of a mono-cell, a bi-cell, and a full cell.

The mono-cell refers to a cell having a structure in which a separator 13 is disposed on one outermost surface thereof and an electrode 12 is disposed on the other outermost surface thereof. For example, the mono-cell may be formed by laminating a first separator 13a, a first electrode 11, a second separator 13b, and a second electrode 12. In addition, the mono-cell may also be formed of three or more electrodes and three or more separators 13 interposed between the respective electrodes.

The bi-cell refers to a cell having a structure in which electrodes having the same polarity are disposed on both outermost surfaces. The bi-cell may be formed by laminating the first electrode 11, the first separator 13a, the second electrode 12, the second separator 13b, and the first electrode 11. In addition, the mono-cell may also be formed of five or more odd number of electrodes and three or more separators 13 laminated between the respective electrodes.

The full cell refers to a cell having a structure in which electrodes having opposite polarities are disposed on both outermost surfaces. The full cell may be formed by laminating the first electrode 11, the first separator 13a, and the second electrode 12. In addition, the mono-cell may also be formed of four or more even number of electrodes and three or more separators 13 laminated between the respective electrodes.

The lamination device 100 of the present invention may manufacture one of the mono-cell, the bi-cell, and the full cell. In addition, the installation number of electrode rolls 110 and 120 and separator rolls 130 may be changed according to the type of the unit cell 10. FIGS. 1 and 2 each illustrate one example of the lamination device 100 configured to manufacture the mono-cell.

The lamination device 100 includes a first electrode roll 110 on which a first electrode sheet 111 is wound. The first electrode sheet 111 is unwound from the first electrode roll 110 and supplied toward a pinch roller 133. One surface or both surfaces of the first electrode sheet 111 are coated with an active material.

The lamination device 100 includes a second electrode roll 120 on which a second electrode sheet 121 is wound. The second electrode sheet 121 is unwound from the second electrode roll 120 and supplied toward a lamination unit 150. One surface or both surfaces of the second electrode sheet 121 are coated with an active material.

The first electrode sheet 111 may be a negative electrode sheet coated with a negative electrode active material, and the second electrode sheet 121 may be a positive electrode sheet coated with a positive electrode active material. In addition, the first electrode sheet 111 may be a positive electrode sheet coated with a positive electrode active material, and the second electrode sheet 121 may be a negative electrode sheet coated with a negative electrode active material.

The lamination device 100 includes a plurality of separator rolls 130 each having a separator sheet 131 wound thereon. The plurality of separator rolls 130 may include a first separator roll 130a on which a first separator sheet 131a is wound, and a second separator roll 130b on which a second separator sheet 131b is wound.

The pinch roller 133 is installed between the first separator roll 130a and the second separator roll 130b so as to overlap the first separator sheet 131a and the second separator sheet 131b. A first cutter unit 141 is installed between the first electrode roll 110 and the pinch roller 133. The first cutter unit 141 cuts the first electrode sheet 111 unwound from the first electrode roll 110 to form the first electrode 11. The first electrode 11 is laminated between the first separator sheet 131a and the second separator sheet 131b at regular intervals. The pinch roller 133 presses the first separator sheet 131a and the second separator sheet 131b toward the first electrode 11 such that the first separator sheet 131a and the second separator sheet 131b are laminated. At least two pinch rollers 133 may be installed to press the first separator sheet 131a and the second separator sheet 131b so as to be laminated. In addition, the pinch roller 133 is a component configured to change a transfer direction of the separator sheet 131, and the number of the pinch rollers 133 may be changed according to the installation number of the separator rolls 130.

The separator sheet 131 is laminated on both surfaces of each of the first electrodes 11 arranged in a line. For example, the first separator sheet 131a is laminated on one surface of each of the first electrodes 11 arranged in a line, and the second separator sheet 131b is laminated on the other surface of each of the first electrodes 11 arranged in a line.

A second cutter unit 143 is disposed at an entrance side of the lamination unit 150, to which the second electrode 12 is introduced. The second cutter unit 143 cuts the second electrode sheet 121 unwound from the second electrode roll 120 and seats the cut second electrode sheet 121 on an upper surface of the second separator sheet 131b. Accordingly, an electrode laminate 102 has a structure in which a plurality of first electrodes 11 are arranged between the first separator sheet 131a and the second separator sheet 131b, and a plurality of second electrodes 12 are arranged on the upper surface of the second separator sheet 131b.

As shown in FIG. 1, one first electrode sheet 111, one second electrode sheet 121, and two separator sheets 131 may be laminated on the electrode laminate 102. In addition, two or more first electrode sheets 111, two or more second electrode sheets 121, and four or more separator sheets 131 may be laminated on the electrode laminate 102. The lamination number of the electrode sheets 111 and 121 and the separator sheets 131 may be variously changed.

In the present invention, the positive electrode active material coated on the first electrode sheet 111 and the negative electrode active material coated on the second electrode sheet 121 may be used without limitation as long as they are active materials known in the art.

The positive electrode active material may include a lithium intercalation material, as a main component, such as a layered compound such as lithium cobalt oxide (LiCoO₂) and lithium nickel oxide (LiNiO₂) or a compound substituted with one or more transition metals; lithium manganese oxides (LiMnO₂) such as the chemical formula Li₁₊ₓMn₂ₓO₄ (where x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂ V₂O₇; Ni site type lithium nickel oxides expressed by the chemical formula LiNi₁₋ₓMₓO₂ (where M is Co, Mn, Al, Cu, Fe, Mg, B, or Ga and x is 0.01 to 0.3); lithium manganese composite oxides expressed by the chemical formula LiMn₂₋ₓMₓO₂ (where M=Co, Ni, Fe, Cr, Zn, or Ta and x=0.01 to 0.1) or Li₂Mn₃MO₈ (where M=Fe, Co, Ni, Cu, or Zn); LiMn₂O₄ in which Li in the formula is partially substituted with alkaline earth metal ions; a disulfide compound; and Fe₂(MoO₄)₃ or a composite oxide formed by a combination thereof. Although the above types are used as the positive electrode active material, the present invention is not limited thereto.

For example, a positive electrode current collector has a thickness of 3 to 500 µm. The positive electrode current collector is not particularly limited as long as it has conductivity without causing chemical changes in a battery. Examples of the positive electrode current collector may include stainless steel, aluminum, nickel, titanium, calcined carbon, or aluminum or stainless steel whose surface has been treated with carbon, nickel, titanium, silver, or the like. The positive electrode current collector may have fine irregularities formed in a surface thereof to increase the adhesion of the positive electrode active material. The positive electrode current collector may be used in various forms such as a film, a sheet, a foil, a net, a porous body, a foamed body, a non-woven fabric body, and the like.

A conductive material may be additionally mixed with positive electrode active material particles. The conductive material is added in an amount of 1 to 50 wt% based on the total weight of the mixture including the positive electrode active material. The conductive material is not particularly limited as long as it has high conductivity without causing chemical changes in a battery. Examples of the conductive material may include graphite such as natural graphite and artificial graphite; carbon black such as carbon black, acetylene black, Ketjen black, channel black, furnace black, lamp black, and thermal black; conductive fibers such as carbon fiber and metal fiber; metal powders such as carbon fluoride, aluminum, and nickel powders; conductive whiskers such as zinc oxide and potassium titanate; conductive oxides such as titanium oxide; and conductive materials such as a polyphenylene derivative.

Further, the negative electrode sheet may be fabricated by applying and drying negative electrode active material particles on a negative electrode current collector, and may further include components such as the conductive material described above, a binder, a solvent, and the like as needed.

For example, the negative electrode current collector has a thickness of 3 to 500 µm. The negative electrode current collector is not particularly limited as long as it has conductivity without causing chemical changes in a secondary battery. Examples of the negative electrode current collector may include copper, stainless steel, aluminum, nickel, titanium, calcined carbon, aluminum or stainless steel whose surface has been treated with carbon, nickel, titanium, silver, or the like, an aluminum-cadmium alloy, or the like. In addition, like the positive electrode current collector, fine irregularities may be formed in the surface to enhance the binding force of the negative electrode active material, and may be used in various forms such as a film, a sheet, a foil, a net, a porous body, a foamed body, a non-woven fabric body, and the like.

Examples of the negative electrode active material may include a carbon such as non-graphitized carbon or graphite-based carbon; a metal complex oxide such as LiₓFe₂O₃ (0≤x≤1), LiₓWO₂ (0≤x≤1), SnₓMe₁₋ₓMe'yO_{z} (Me: Mn, Fe, Pb, Ge; Me': Al, B, P, Si, elements in Group I, II, and III on the periodic table, a halogen; 0<x≤1; 1≤y≤3; 1 ≤z≤8); a lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni-based material, or the like.

A binder polymer capable of being used in the electrode sheets 11 and 12 is a component that assists in bonding the electrode active material particles and the conductive material and binding the electrode active material particles to the electrode current collector, and added in an amount of, for example, 1 to 50 wt% based on the total weight of the mixture including the electrode active material. Examples of the binder polymer may include any one binder polymer selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but the present invention is not limited thereto.

Non-limiting examples of the solvent used in the manufacturing of the electrodes include acetone, tetrahydrofuran, methylene chloride, chloroform, dimethylformamide, N-methyl-2-pyrrolidone (NMP), cyclohexane, water, or a mixture thereof. Such solvents provide an appropriate level of viscosity so that a slurry coating layer can be formed at a desired level on a surface of the electrode current collector.

The separator 13 includes a porous polymer substrate, and a porous coating layer positioned on both surfaces of the porous polymer substrate and including inorganic particles and a binder polymer.

The porous polymer substrate may be a polyolefin-based porous substrate.

The polyolefin porous substrate may be in the form of a film or a non-woven web. By having the porous structure as described above, the electrolyte may be smoothly moved between the positive electrode and the negative electrode. The porous structure may increase an electrolyte impregnation property of the substrate itself so that excellent ion conductivity may be secured, and may prevent an increase in resistance inside an electrochemical device so that performance degradation of the electrochemical device may be prevented.

The polyolefin porous substrate used in the present invention may be any planar porous substrate that is generally used in electrochemical devices, and the material or shape thereof may be variously selected as desired.

The polyolefin porous substrate may be, but is not limited to, a film or non-woven web formed of high-density polyethylene, low-density polyethylene, linear low-density polyethylene, ultrahigh molecular weight polyethylene, polypropylene, or a mixture of two or more thereof. However, the present invention is not limited thereto.

When the separator 13 according to one embodiment of the present invention is used, since the porous coating layer is provided on both sides of the porous polymer substrate, a solid electrolyte interface layer may be uniformly formed due to the improvement of impregnation performance with respect to the electrolyte, and superior air permeability may be secured as compared to a conventional single-sided inorganic-coated separator 13. For example, the air permeability may be within 120 sec/100 cc. In addition, even when the inorganic porous coating layer is provided on both sides of the porous polymer substrate, a thickness comparable to that of the conventional single-sided inorganic-coated separator may be realized.

Further, when the separator 13 according to one embodiment of the present invention is used, stability of the separator 13 may be improved so that heat- and pressure-resistant properties may be secured. Specifically, it is possible to secure a heat-resistant property having a heat-shrinkage property of 5% or less at 180°C and secure a puncture strength of 550 gf or more, and damage or penetration of the separator 13 in a step portion may be prevented when core deformation occurs during a cycle of the secondary battery in which the separator 13 is employed.

The lamination device 100 includes the lamination unit 150, a final cutter 160, and the vision unit V.

The lamination unit 150 includes a heater unit 151 and a lamination roller unit 153.

The heater unit 151 heats the separator sheet 131 and the electrodes 11 and 12. The heater units 151 are disposed on both sides of the separator sheet 131 to heat the separator sheet 131 and the electrodes 11 and 12 from the both sides. The heater units 151 are installed on both sides of the first electrode sheet 111 to be spaced apart from the separator sheet 131. In order to uniformly heat throughout the electrodes 11 and 12 and the separator sheet 131, the heater unit 151 may be formed to be longer than a width of the separator sheet 131.

The lamination roller unit 153 presses the separator sheet 131 and the electrodes 11 and 12. The lamination roller unit 153 includes an upper lamination roller 153a and a lower lamination roller 153b respectively disposed on both sides of the separator sheet 131 to press the separator sheet 131 and the electrodes 11 and 12 from the both sides.

The final cutter 160 is disposed on a downstream side of the lamination roller unit 153. The final cutter 160 cuts the separator sheet 131 and the electrodes 11 and 12 to form the unit cell 10. At this time, the final cutter 160 cuts a portion of the separator sheet 131 between two adjacent electrodes 11 and 12.

The vision unit V is disposed on a downstream side of the final cutter 160 and captures an image of the unit cell 10. The vision unit V irradiates light to the unit cell 10 cut out by the final cutter 160 and measures light reflected from the unit cell 10 to capture the image of the unit cell 10.

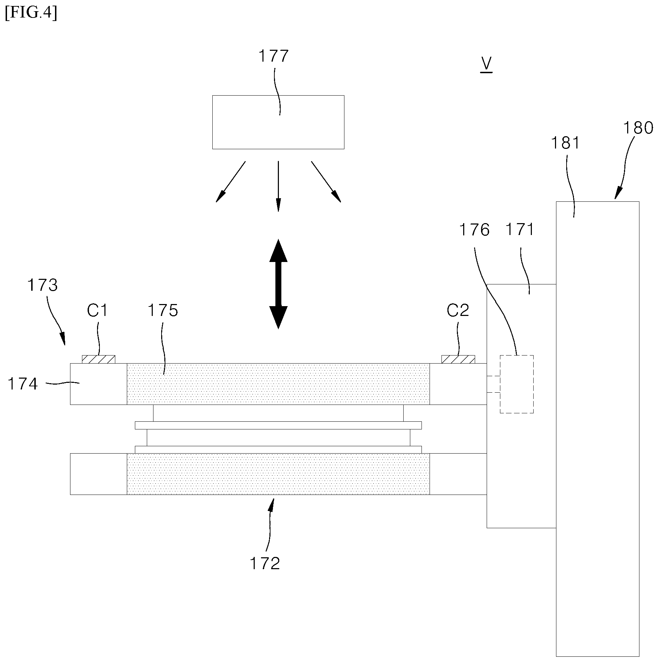

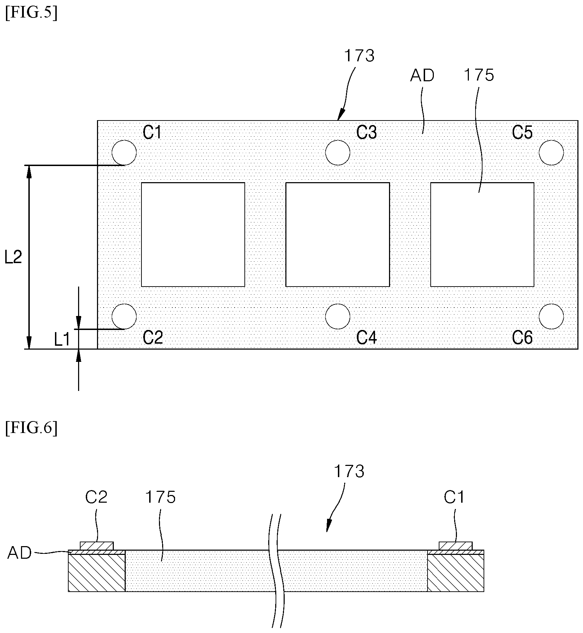

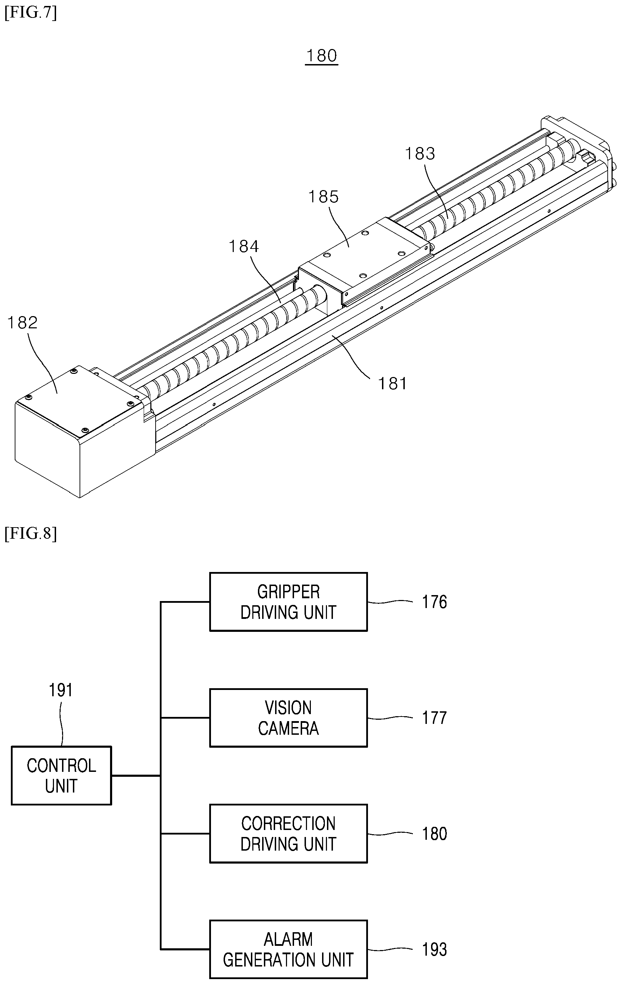

FIG. 3 is a perspective view schematically illustrating the vision unit in the lamination device of FIG. 1, FIG. 4 is a side view schematically illustrating the vision unit in the lamination device of FIG. 1, FIG. 5 is a plan view schematically illustrating a state in which calibration marks are formed on an upper surface of the upper gripper in the vision unit of FIG. 4, FIG. 6 is a cross-sectional view schematically illustrating a state in which the calibration marks and an anodizing layer are applied on the upper surface of the upper gripper in the vision unit of FIG. 4, FIG. 7 is a perspective view schematically illustrating a correction driving unit in the lamination device of FIG. 1, and FIG. 8 is a block diagram schematically illustrating the lamination device according to the present invention.

Referring to FIGS. 3 to 8, the vision unit V of the lamination device 100 includes a linear guide 171, the lower gripper 172, the upper gripper 173, and a gripper driving unit 176.

The linear guide 171 is disposed on one side of a vision camera 177. In order to avoid a transfer path of the unit cell 10, the linear guide 171 is installed on one side of the transfer path in a width direction. The linear guide 171 may be installed in a state of being erected in a vertical direction. As a height of the linear guide 171 is adjusted, heights of the lower gripper 172 and the upper gripper 173 are adjusted simultaneously.

The lower gripper 172 is fixedly installed on the linear guide 171. The lower gripper 172 is disposed below the transfer path of the unit cell 10. The unit cell 10 cut out by the final cutter 160 is supplied to the lower gripper 172. At this time, one unit cell 10 per 0.2 to 0.3 seconds may be supplied to the lower gripper 172. The unit cell 10 may have a thickness of 100 to 500 um and be transferred at a speed of 300 to 500 mm/s. At least two unit cells 10 may be supplied to the lower gripper 172 at one time. A transfer speed of the unit cell 10 may be appropriately changed in consideration of the size, thickness, and the like of the unit cell 10.

The upper gripper 173 is installed on an upper side of the lower gripper 172 to be liftable and lowerable in the vertical direction (Z-axis direction). The upper gripper 173 is disposed on an upper side of the transfer path of the unit cell 10. The upper gripper 173 is lowered to press the unit cell 10 supplied to the lower gripper 172. Accordingly, when the unit cell 10 is bent or twisted, the unit cell 10 may be flattened as the lower gripper 172 presses the unit cell 10. In addition, when an electrode tab (not shown) of the unit cell 10 is excessively lifted or sagging, the electrode tab may be uniformly spread by the pressing of the lower gripper 172.

When two unit cells 10 are supplied to the lower gripper 172 at an interval of 0.2 to 0.3 seconds, the upper gripper 173 repeatedly reciprocates in the vertical direction approximately every 0.4 to 0.6 seconds. Considering that the production volume is an average of 10 pieces per day, the lower gripper 172 moves up and down about 50,000 times per day. A lifting and lowering speed of the upper gripper 173 may be variously changed according to the speed at which the unit cell 10 is supplied.

The gripper driving unit 176 lifts and lowers the upper gripper 173 so that the upper gripper 173 presses the unit cell 10. A servo motor or a cylinder may be applied to the gripper driving unit 176. The gripper driving unit 176 is installed in the linear guide 171. Since the gripper driving unit 176 reciprocates the upper gripper 173 at a high speed, the upper gripper 173 or the structure assembled thereto is more likely to change or deform as compared to the other components. In addition, a bolt and a nut for assembling the upper gripper 173 to the linear guide 171 may be loosened.

The vision unit V includes a plurality of calibration marks C1 to C6, the vision camera 177, a correction driving unit 180, and the control unit 191.

The plurality of calibration marks C1 to C6 are disposed on the upper gripper 173. The calibration marks C1 to C6 may be applied onto an upper surface of the upper gripper 173. The plurality of calibration marks C1 to C6 may be disposed on the upper surface of the upper gripper 173 at the same interval. Sizes of the calibration marks C1 to C6 may be variously changed in consideration of a separation distance between the upper gripper 173 and the vision camera 177, the entire area of the vision camera 177, and reading precision of the vision camera 177.

The vision camera 177 is disposed on an upper side of the upper gripper 173 to capture an image of the plurality of calibration marks C1 to C6. The vision camera 177 may capture the image of the calibration marks C1 to C6 approximately every 0.4 to 0.6 seconds. The vision camera 177 transmits the captured image of the calibration marks C1 to C6 to the control unit 191. At this time, as a gap (distance) between the vision camera 177 and the calibration marks C1 to C6 increases, a size of the captured image of the calibration marks C1 to C6 decreases, and as the gap (distance) between the vision camera 177 and the calibration marks C1 to C6 decreases, the size of the captured image of the calibration marks C1 to C6 increases.

The correction driving unit 180 is connected to the lower gripper 172 and the upper gripper 173 to correct the heights of the lower gripper 172 and the upper gripper 173. The correction driving unit 180 may adjust the heights of the lower gripper 172 and the upper gripper 173 by moving the linear guide 171 in the vertical direction. The correction driving unit 180 is capable of precisely adjusting the heights of the lower gripper 172 and the upper gripper 173 in units of 1/100 mm to 1/200 mm.

The control unit 191 reads the plurality of calibration marks C1 to C6 to calculate a positional deviation between an actual position of the upper gripper 173 and a preset allowable position range. The control unit 191 moves the lower gripper 172 and the upper gripper 173 to correct the positional deviation when the positional deviation is outside the allowable position range. At this time, the upper gripper 173 and the lower gripper 172 are moved until the captured image of the calibration marks C1 to C6 becomes equal in size to a reference image of an allowable image range.

For example, in a case in which the allowable image range is set to A ±5%, when an actual image size is outside A ±5%, the control unit 191 may adjust the heights of the lower gripper 172 and the upper gripper 173 until the captured image becomes the same size as an intermediate image A in the allowable position range.

Accordingly, when the positional deviation occurs, such as the assembly state of the upper gripper 173 and the lower gripper 172 and the structure assembled thereto, a setting assembly tolerance, and the like, the positional deviation may be eliminated by the correction driving unit 180.

In addition, by preventing a gap between the vision unit V and the unit cell 10 from being changed to be outside an allowable value, continuous mismeasurement of the unit cell 10 may be prevented, and a defect rate of the unit cell 10 may be significantly reduced. In addition, it is possible to prevent the unit cell 10 within an allowable value range (good quality range) from being determined to be defective.

Some calibration marks C2, C4, and C6 are disposed side by side at a first distance P1 from one end of the upper gripper 173. The remaining calibration marks C1, C3, and C5 are disposed side by side at a second distance P2 from the one end of the upper gripper 173. Some calibration marks C2, C4, and C6 and the remaining calibration marks C1, C3, and C5 may be disposed in parallel with the transfer path of the unit cell 10. Accordingly, by calculating actual sizes of the plurality of calibration marks C1 to C6, the control unit 191 may determine whether the upper gripper 173 has been changed in height or tilted in a direction perpendicular to a direction parallel to the transfer path.

A transparent window 175 is formed in the upper gripper 173 to allow light of the vision camera 177 to pass therethrough, and an anodizing layer AD is applied onto a frame unit 174 on a circumference of the transparent window 175. Here, the anodizing means that when the frame unit 174 is electrically conducted as a positive electrode in the electrolyte, a surface of the frame unit 174 is oxidized by oxygen generated from the positive electrode to form an anodized film. As a material for the surface of the frame unit 174, aluminum (Al), magnesium (Mg), zinc (Zn), titanium (Ti), hafnium (Hf), niobium (Nb) alloys, and the like may be applied. The anodizing layer AD is a porous film, can be dyed in various colors, and has a smooth surface, so that the image read by the vision camera 177 is easily identifiable.

The anodizing layer AD may have a black color, and the calibration marks C1 to C6 may have a white color. In the image captured by the vision camera 177, the anodizing layer AD becomes a background screen and the white mark corresponds to a subject. When the background screen of the captured image is black, the subject and its boundary are clear and a dimension of the subject is clearly shown. On the other hand, when the background screen of the captured image is white or chromatic, the subject and its boundary are blurred and the dimension of the subject is not clearly shown. In the present invention, since the white calibration marks C1 to C6 are applied to the black anodizing layer AD, the sizes of the calibration marks C1 to C6 can be more accurately read. By accurately reading the sizes of the calibration marks C1 to C6, the height of the upper gripper 173 can be corrected more accurately.

The calibration marks C1 to C6 may each be formed in a circular shape. Each of the calibration marks C1 to C6 is formed with a diameter of about 2 to 5 mm. Since the circular calibration marks C1 to C6 are formed to have the same diameter in all directions, the size of the captured image of the calibration marks C1 to C6 can be more accurately read. When a circumference of each of the calibration marks C1 to C6 has an irregular shape, it becomes difficult to accurately read the sizes of the calibration marks C1 to C6.

The vision camera 177 captures the image of the plurality of calibration marks C1 to C6 when the upper gripper 173 is completely lowered. For example, when the upper gripper 173 is lowered at an interval of approximately 0.4 to 0.6 seconds, the vision camera 177 captures the image of the plurality of calibration marks C1 to C6 approximately every 0.4 to 0.6 seconds. Accordingly, the image of the calibration marks C1 to C6 and the image of the unit cell 10 may be simultaneously captured as the vision camera 177 emits light. **In** addition, the above-described image capturing method of the vision camera 177 may reduce an image capturing cycle of the vision camera 177 by half and may prevent an increase in power consumption of the vision camera 177 as compared to a method of individually capturing the image of the calibration marks and the image of the unit cell 10.

Since the upper gripper 173 is reciprocated at a high speed, a bolt or a nut is slightly loosened from the assembled portion of the upper gripper 173, or the upper gripper 173 or the lower gripper 172 is a component that is most likely to be bent. Since the image of the calibration marks C1 to C6 and the image of the unit cell 10 are simultaneously captured while the unit cell 10 is pressed by the upper gripper 173, an operation error (error in operational height) of the upper gripper 173 may also be accurately measured.

After the position of the upper gripper 173 is corrected, the vision camera 177 recaptures an image of the calibration marks C1 to C6, and the control unit 191 checks again whether the corrected position of the upper gripper 173 is within the allowable position range. Accordingly, it is possible to check whether the correction of the height of the upper gripper 173 is accurately performed.

The lamination device further includes an alarm generation unit 193 configured to notify that the upper gripper 173 needs to be replaced when the corrected position of the upper gripper 173 is outside the allowable position range. The alarm generation unit 193 is electrically connected to the control unit 191. When the control unit 191 transmits an alarm signal to the alarm generation unit 193, the alarm generation unit 193 outputs the alarm signal. When the alarm generation unit outputs the alarm signal, the control unit 191 causes the lamination device 100 to stop operating. Accordingly, an operator may hear the alarm signal and check whether the upper gripper 173 or the lower gripper 172 is deformed by itself, and quickly replace the grippers 172 and 173. In addition, continuous occurrence of defects in the unit cells 10 may be stopped.

The correction driving unit 180 includes a case unit 181, a correction motor unit 182, a ball screw 183, and a slider 185.

The case unit 181 is fixed in position by a surrounding structure (not shown). The correction motor unit 182 is installed inside the case unit 181. A step motor that can be precisely adjusted in height in units of 1/100 mm to 1/200 mm is applied to the correction motor unit 182. The ball screw 183 is connected to a rotation shaft of the correction motor unit 182. The slider 185 is installed to be movable in a longitudinal direction of the case unit 181 when the ball screw 183 rotates. The slider 185 is screw-coupled to the ball screw 183 and is movably coupled to a rotation prevention rod 184 parallel to the ball screw 183. The linear guide 171 is connected to the slider 185. Accordingly, when the correction motor unit 182 is driven, the slider 185 is moved as the ball screw 183 rotates. The height of the linear guide 171 is corrected as the slider 185 is moved. The linear guide 171, the lower gripper 172, and the upper gripper 173 are moved together with the slider 185.

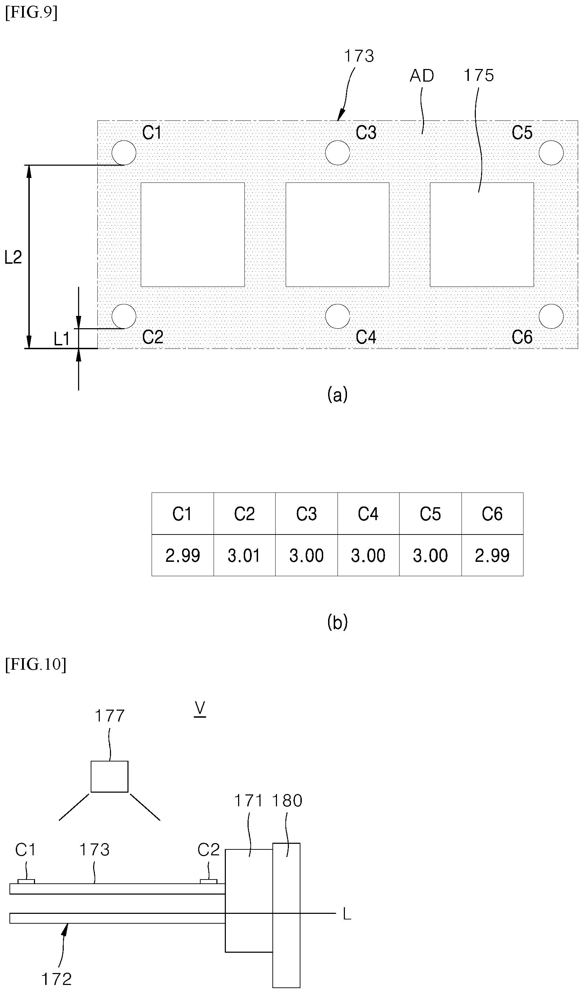

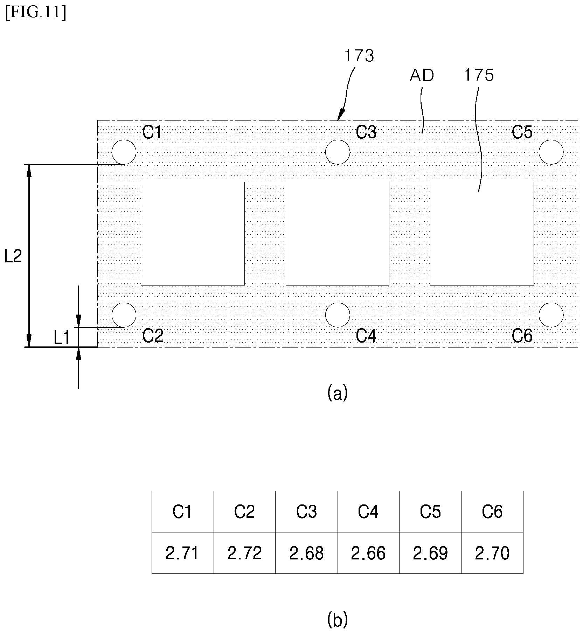

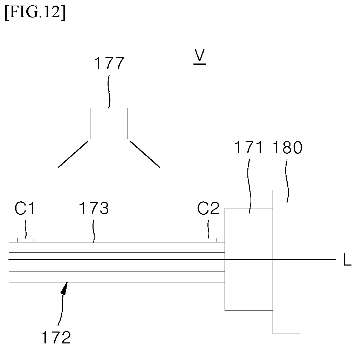

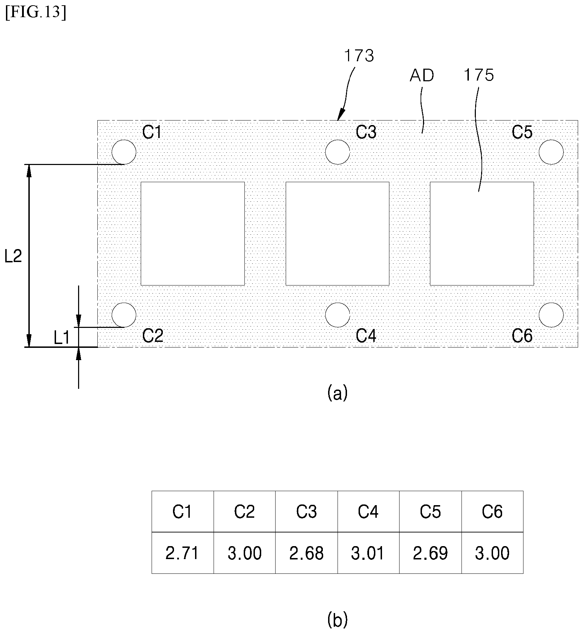

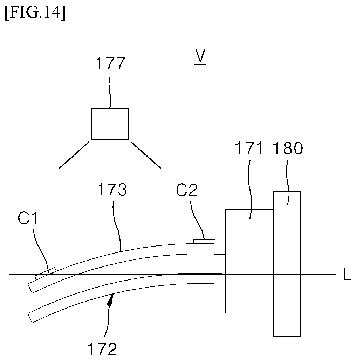

FIG. 9 is a view illustrating an example of the captured image of the calibration marks according to the present invention, FIG. 10 is a view illustrating a case in which the positions of the lower gripper and the upper gripper according to the present invention are within the allowable position range, FIG. 11 is a view illustrating another example of the captured image of the calibration marks according to the present invention, FIG. 12 illustrates a case in which the positions of the lower gripper and the upper gripper according to the present invention are outside the allowable position range, FIG. 13 is a view illustrating still another example of the captured image of the calibration marks according to the present invention, and FIG. 14 is a view illustrating a case in which the lower gripper and the upper gripper according to the present invention are deformed by themselves.

The correction of the height of the upper gripper 173 will be described in detail with reference to FIGS. 9 to 14. A case in which the diameter of each of the calibration marks C1 to C6 is 3 mm and six calibration marks C1 to C6 are formed will be described as an example.

When the vision camera 177 captures an image of the plurality of calibration marks C1 to C6 and transmits the image to the control unit 191, the control unit 191 reads the size of each of the plurality of calibration marks C1 to C6.

In the read sizes of the calibration marks C1 to C6, C1 may have a size of 2.99 mm, C2 may have a size of 3.01 mm, C3 may have a size of 3.00 mm, C4 may have a size of 3.00 mm, C5 may have a size of 3.00 mm, and C6 may have a size of 3.06 mm (see FIG. 9). Here, the lower gripper 172 is disposed on the same straight line as a reference line L preset in the control unit 191 (see FIG. 10). In this case, since the plurality of calibration marks C1 to C6 are within the allowable position range, the lower gripper 172 and the upper gripper 173 are regarded as being in a normal state.

In contrast, it may be indicated that C1 has a size of 2.71 mm, C2 has a size of 2.72 mm, C3 has a size of 2.68 mm, C4 has a size of 2.66 mm, C5 has a size of 2.69 mm, and C6 has a size of 2.70 mm (see FIG. 11). Here, the lower gripper 172 is disposed below the reference line L preset in the control unit 191 (see FIG. 12). In this case, since all the calibration marks C1 to C6 are outside a lower limit of the allowable position range, the control unit 191 determines that the lower gripper 172 and the upper gripper 173 are lowered than the allowable value. Subsequently, the height of the linear guide 171 is corrected by driving the correction driving unit 180 so that the plurality of calibration marks C1 to C6 becomes equal in size to the image within the allowable position range.

In contrast, it may be indicated that C1 has a size of 2.71 mm, C2 has a size of 3.00 mm, C3 has a size of 2.68 mm, C4 has a size of 3.01 mm, C5 has a size of 2.69 mm, and C6 has a size of 3.00 mm (see FIG. 13). Here, a front end portion of the lower gripper 172 is disposed below the reference line L preset in the control unit 191 (see FIG. 14). In this case, the size of each of the calibration marks C2, C4, and C6 disposed at the first distance P1 (disposed close to the linear guide 171) from the linear guide 171 is outside the lower limit of the allowable position range, and the calibration marks C1, C3, and C5 disposed at the second distance P2 (disposed far from the linear guide 171) from the linear guide 171 are within the allowable position range. Subsequently, the control unit 191 determines that the lower gripper 172 and the upper gripper 173 themselves are bent downward, and outputs an alarm signal to the alarm generation unit 193.

A control method of the lamination device according to the present invention configured as described above will be described.

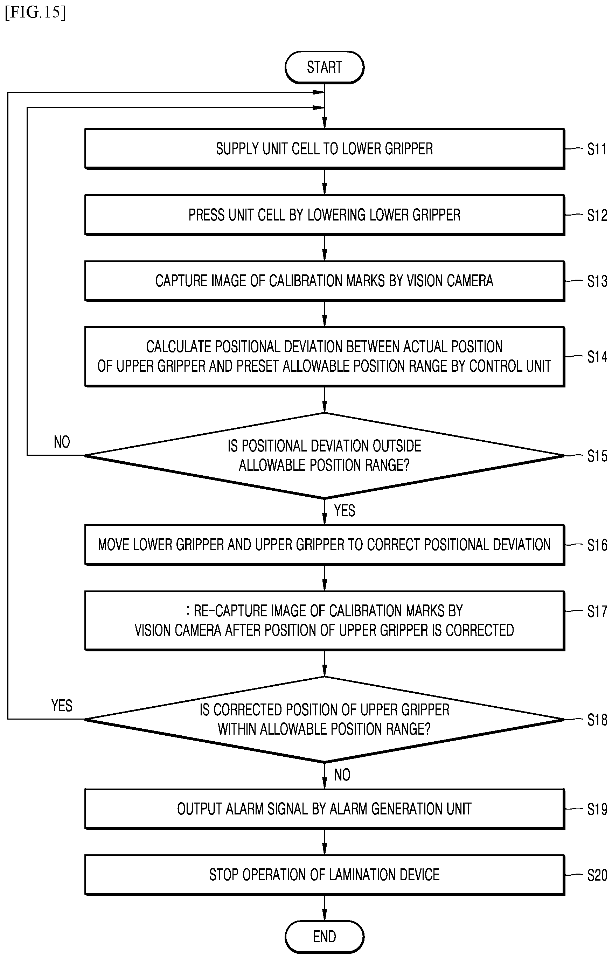

FIG. 15 is a flowchart schematically illustrating a control method of the lamination device according to the present invention.

Referring to FIG. 15, when the final cutter 160 cuts out the unit cell 10, the unit cell 10 is supplied to the lower gripper 172 (S11). At this time, two unit cells 10 are supplied to the lower gripper 172 every 0.4 seconds to 0.6 seconds.

As the gripper driving unit 176 is driven, the upper gripper 173 is lowered to press the unit cell 10 (S12). Accordingly, when the unit cell 10 is bent or twisted, the unit cell 10 may be flattened as the lower gripper 172 presses the unit cell 10. In addition, when an electrode tab of the unit cell 10 is excessively lifted or sagging, the electrode tab may be uniformly spread by the pressing of the lower gripper 172.

The vision camera 177 captures an image of the plurality of calibration marks C1 to C6 formed on the upper gripper 173 and transmits the image to the control unit 191 (S13). The vision camera 177 may capture the image of the calibration marks C1 to C6 approximately every 0.4 to 0.6 seconds. At this time, as a gap between the vision camera 177 and the calibration marks C1 to C6 increases, a size of the captured image of the calibration marks C1 to C6 decreases, and as the gap between the vision camera 177 and the calibration marks C1 to C6 decreases, the size of the captured image of the calibration marks C1 to C6 increases.

At this time, some calibration marks C2, C4, and C6 are disposed side by side at the first distance P1 from one end of the upper gripper 173, and the remaining calibration marks C1, C3, and C5 are disposed side by side at the second distance P2 from the one end of the upper gripper 173. Accordingly, by calculating actual sizes of the plurality of calibration marks C1 to C6, the control unit 191 may determine whether the upper gripper 173 has been changed in height or tilted in a direction perpendicular to a direction parallel to the transfer path.

A circumference of the transparent window 175 of the upper gripper 173 is coated with the anodizing layer AD. At this time, a black color is applied to the anodizing layer AD, and a white color is applied to the calibration marks C1 to C6. In the image captured by the vision camera 177, the anodizing layer AD becomes a background screen and the white mark corresponds to a subject. When the background screen of the captured image is black, the subject and its boundary are clear and a dimension of the subject is clearly shown. Accordingly, it is possible to more accurately read the size of each of the calibration marks C1 to C6.

Each of the calibration marks C1 to C6 is formed in a circular shape. Since the circular calibration marks C1 to C6 are formed to have the same diameter in all directions, the size of the captured image of the calibration marks C1 to C6 can be more accurately read.

The vision camera 177 captures the image of the plurality of calibration marks C1 to C6 when the upper gripper 173 is completely lowered. When the upper gripper 173 is lowered at an interval of approximately 0.4 to 0.6 seconds, the vision camera 177 captures the image of the plurality of calibration marks C1 to C6 approximately every 0.4 to 0.6 seconds. Accordingly, the image of the calibration marks C1 to C6 and the image of the unit cell 10 may be simultaneously captured as the vision camera 177 emits light. Accordingly, it is possible to prevent an increase in an image capturing cycle of the vision camera 177 and prevent an increase in power consumption of the vision camera 177.

The control unit 191 reads the plurality of calibration marks C1 to C6 to calculate a positional deviation between an actual position of the upper gripper 173 and a preset allowable position range (S14).

In the control unit 191, it is determined whether the positional deviation is outside the allowable position range (S15). When it is determined that the positional deviation is within the allowable position range, the correction driving unit 180 is not operated.

When it is determined that the positional deviation is outside the allowable position range, the lower gripper 172 and the upper gripper 173 are moved to correct the positional deviation (S16). Accordingly, when the positional deviation occurs, such as the assembly state of the upper gripper 173 and the lower gripper 172 and the structure assembled thereto, a setting assembly tolerance, and the like, the positional deviation may be eliminated by the correction driving unit 180. That is, the upper gripper 173 and the lower gripper 172 are moved until the captured image of the calibration marks C1 to C6 becomes equal in size to a reference image within the allowable image range.

After the position of the upper gripper 173 is corrected, the vision camera 177 recaptures an image of the calibration marks C1 to C6 (S17). The vision camera 177 transmits the re-captured image to the control unit 191.

The control unit 191 determines again whether the corrected position of the upper gripper 173 is within the allowable position range (S18). Accordingly, it is possible to check whether the correction of the height of the upper gripper 173 is accurately performed.

When it is determined that the corrected position of the upper gripper 173 is outside an allowable position, the alarm generation unit 193 outputs an alarm signal (S19). When the alarm generation unit outputs the alarm signal, the control unit 191 causes the lamination device to stop operating (S20). Accordingly, an operator may hear the alarm signal and check whether the upper gripper 173 or the lower gripper 172 is deformed by itself, and quickly replace the grippers. **In** addition, continuous occurrence of defects in the unit cells 10 may be stopped.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention. Further, although the operating effects according to the configuration of the present invention are not explicitly described while describing an embodiment of the present invention, it should be appreciated that predictable effects are also to be recognized by the configuration.

## Claims

1. A lamination device comprising:
a lower gripper configured to receive supply of a unit cell;
an upper gripper installed opposite the lower gripper and liftable and lowerable in a vertical direction;
a gripper driving unit configured to lift and lower the upper gripper so that the upper gripper is configured to press the unit cell;
a plurality of calibration marks disposed on the upper gripper;
a vision camera configured to capture an image of the plurality of calibration marks;
a correction driving unit connected to the lower gripper and the upper gripper, the correction driving unit being configured to correct a height of each of the lower gripper and the upper gripper; and
a control unit configured to read the plurality of calibration marks to calculate a positional deviation between an actual position of the upper gripper and a preset allowable position range, the control unit being configured to move the lower gripper and the upper gripper to correct the positional deviation.

2. The lamination device of claim 1, wherein the control unit has an allowable image range for the plurality of calibration marks preset therein, and the control unit is configured to calculate the positional deviation of the upper gripper by comparing the allowable image range with a size of the image captured by the vision camera.

3. The lamination device of claim 1, wherein some of the calibration marks are disposed side by side at a first distance from an end of the upper gripper, and the remaining ones of the calibration marks are disposed side by side at a second distance from the end of the upper gripper.

4. The lamination device of claim 1, wherein the upper gripper includes a transparent window configured to receive passage therethrough of light to the vision camera.

5. The lamination device of claim 1, wherein a circumference of the transparent window is coated with an anodizing layer.

6. The lamination device of claim 5, wherein the anodizing layer is black, and the calibration marks are white.

7. The lamination device of claim 1, wherein each of the calibration marks has a circular shape.

8. The lamination device of claim 1, wherein the vision camera is configured to capture the image of the plurality of calibration marks when the upper gripper is completely lowered.

9. The lamination device of claim 1, wherein the vision camera is disposed adjacent to an upper side of the upper gripper.

10. The lamination device of claim 1, wherein the vision camera is configured to recapture an image of the calibration marks after a position of the upper gripper is corrected, and the control unit is configured to recheck whether a corrected position of the upper gripper is within the allowable position range.

11. The lamination device of claim 1, wherein the lower gripper is fixed to a linear guide, and the upper gripper is installed on the linear guide and configured to be liftable and lowerable.

12. The lamination device of claim 1, further comprising an alarm generation unit configured to notify that the upper gripper needs to be replaced when a corrected position of the upper gripper is outside of the allowable position range.

13. A method of controlling a lamination device, the method comprising:
supplying a unit cell to a lower gripper;
pressing the unit cell by lowering an upper gripper;
capturing, using a vision camera, an image of a plurality of calibration marks formed on the upper gripper and transmitting the image to a control unit;
reading, using the control unit, the plurality of calibration marks and calculating a positional deviation between an actual position of the upper gripper and a preset allowable position range; and
moving the lower gripper and the upper gripper to correct the positional deviation when the positional deviation is outside of the preset allowable position range.

14. The method of claim 13, wherein some of the calibration marks are disposed side by side at a first distance from an end of the upper gripper, and remaining ones of the calibration marks are disposed side by side at a second distance from the one end of the upper gripper.

15. The method of claim 13, wherein a circumference of a transparent window of the upper gripper is coated with an anodizing layer.

16. The method of claim 15, wherein the anodizing layer is black, and the calibration marks are white.

17. The method of claim 15, wherein each of the calibration marks has a circular shape.

18. The method of claim 13, wherein the vision camera captures the image of the plurality of calibration marks when the upper gripper is completely lowered against the unit cell.

19. The method of claim 13, further comprising:
re-capturing an image of the calibration marks using the vision camera after a position of the upper gripper is corrected; and
rechecking, using the control unit, whether a corrected position of the upper gripper is within the preset allowable position range.

20. The method of claim 19, further comprising outputting an alarm signal using an alarm generation unit when the corrected position of the upper gripper is outside the preset allowable position range.
